# EUROPEAN PATENT APPLICATION

(11) **EP 3 971 151 A1**
(43) Date of publication of application: **23.03.2022**
(21) Application number: 20382820.7
(22) Date of filing: 17.09.2020
(51) Int. Cl.: C04B 28/02, C04B 28/04, C04B 40/00

(54) **CEMENTITIOUS COMPOSITIONS WITH HIGH COMPRESSIVE STRENGTH AND USES THEREOF**

(71) Applicant: SIKA TECHNOLOGY AG, 6340 Baar (CH)
(72) Inventor: CALAMA, Juan Antonio, 27007 SALAMANCA (ES)
(74) Representative: Sika Patent Attorneys

(57) **Abstract**

The present invention relates to cementitious compositions comprising
a) 4 - 80 wt.-%, preferably 26 - 75 wt.-%, especially 30 - 66 wt.-% of a cementitious binder, especially of Ordinary Portland Cement,
b) 5 - 95 wt.-%, preferably 20 - 73 wt.-% more preferably 33 - 66 wt.-%, of aluminum oxide, and
c) 1 - 15 wt.-% preferably 2 - 10 wt.-%, more preferably 3 - 6 wt.-% of fibers.

Such cementitious compositions have a very high strength. The present invention also relates to uses of such cementitious compositions for example for concrete repair or as grouting materials.

## Description

### Technical field

The present invention relates to cementitious compositions with very high strength, the cementitious compositions comprising aluminum oxide and fibers. The present invention also relates to uses of such cementitious compositions for example for concrete repair or as grouting materials.

### State of the art

In recent years, special concretes such as High Performance Concrete (HPC) and Ultra High Performance Concrete (UHPC), as well as high strength and ultra high strength mortars have been introduced to the market.

High Performance and Ultra High Performance concretes and mortars are characterised by very good workability, high strengths of over 60 MPa or over 80 MPa and above, and high durability. They allow significantly smaller component dimensions, which can save space and reduce transport costs.

These special concretes and mortars typically contain a high proportion of mineral binder and a high proportion of fines with a particle size below 0.125 mm. The high proportion of fines results in good homogeneity of the materials and the high proportion of mineral binders results in high strength. High-strength concretes and mortars also have little to very little water, because water which is not needed for cement hydration evaporates and leaves pores which reduce the strength. In normal concrete, the w/c ratio, i.e. the mass ratio of water to cement, is usually between 0.45 and 0.60. In HPC and UHPC, the w/c ratio is much lower at less than 0.40, often less than 0.30 or 0.25.

For example, KR 10161390 discloses a composition for making ultra-high strength prestressed concrete piles. The composition comprising a binder which is composed of 65 - 85 wt.-% of cement and 15 - 35 wt.-% of a mixture comprising 35 - 50 wt.-% of calcium oxide, 15 - 30 wt.-% of sulfur trioxide, 1 - 5 wt.-% of aluminum oxide, and 10 - 15 wt.-% of alpha-hemihydrate gypsum.

US 2019/211248 discloses thermally conductive mortar formulations comprising 15 - 25 wt.-% of grey cement, 5 - 10 wt.-% of aluminum oxide with a particle size of 45 µm, 60 - 70 wt.-% of aluminum oxide particles with 210 µm, and optionally up to 50 wt.-% of sand aggregate. The US 2019/211248 is silent about compressive strength of such formulations. However, cementitious compositions comprising materials with a particle size as small as the aluminum oxide used in US 2019/211248 frequently have a higher water demand or weaker workability. Additionally, materials with such small particle size are difficult to handle and pose additional problems regarding occupational health and safety.

Cementitious mortars with a high content in alumina are typically used as refractory mortars. However, such mortars are not usually optimized for high strength.

The processes and formulations described in the prior art are either complicated, require raw materials that are difficult to handle, and/or deteriorate the workability of cementitious compositions. There is thus a continued need for compositions and methods to make ultra-high strength cementitious concretes and mortars. Preferably, such compositions and methods are simple and that do not require raw materials that are difficult to handle.

### Summary of the invention

It is an object of the present invention to provide cementitious compositions, especially cementitious compositions based on Ordinary Portland Cement, with an increased strength, especially an increased compressive strength. It is another objective of the present invention to provide a simple method to increase the strength of cementitious compositions, especially cementitious compositions based on Ordinary Portland Cement. It is still another object of the present invention to provide for uses of cementitious compositions especially cementitious compositions based on Ordinary Portland Cement, with increased strength.

It has been found that the use of aluminum oxide particles of certain particle size and of fibers, especially steel fibers, acts synergistically on the increase of compressive strength of cementitious materials, especially cementitious materials based on Ordinary Portland Cement.

It is a specific advantage of the present invention that the use of aluminum oxide particles and of fibers, especially steel fibers, in combination, synergistically increases the compressive strength after different times of hardening. Thus, cementitious compositions, especially mortars and grouts, with much higher mechanical properties or much lower cement content needed to achieve certain mechanical properties as compared to conventional mortars and grouts are obtained.

Another advantage of the present invention is that the autogenous strain of inventive cementitious compositions is significantly reduced. Thus, there is no or a significantly reduced need for organic shrinkage reducing agents.

The objectives of the present invention are thus solved as described in the independent claims. Further aspects of the invention are described in the dependent claims.

### Detailed description

In a first aspect the present invention relates to a dry cementitious composition comprising or consisting of, in each case relative to the total dry weight of the cementitious composition,
a) 4 - 80 wt.-%, preferably 26 - 75 wt.-%, especially 30 - 66 wt.-% of a cementitious binder, especially of Ordinary Portland Cement,
b) 5 - 95 wt.-%, preferably 20 - 73 wt.-% more preferably 33 - 66 wt.-% of aluminum oxide, and
c) 1 - 15 wt.-% preferably 2 - 10 wt.-%, more preferably 3 - 6 wt.-% of fibers.

A cementitious composition within the present context is a composition comprising at least one cementitious binder. A cementitious binder is in particular a material which reacts in the presence of water in a hydration reaction to form solid hydrates or hydrate phases. This can be in particular a hydraulic binder which can be hardened with water even under water, such as in particular cement, or a latent hydraulic binder which sets with water under the action of additives, such as in particular granulated blast furnace slag, or a pozzolanic binder, such as in particular fly ash, silica fume, micro silica, or a mixture thereof. Within the present context, a cementitious composition does not comprise any reactive polymer or polymer resin. In particular, the cementitious composition is free of epoxy resins.

A dry cementitious composition has a content of water of not more than 10 wt.-%, preferably not more than 3 wt.-%, especially not more than 1 wt.-%, in each case relative to the total weight of the dry cementitious composition.

The cementitious compositions of the present invention comprise at least Ordinary Portland Cement (OPC) as a cementitious binder. According to embodiments, the content of OPC in a cementitious composition of the present invention is in the range of 4 - 80 wt.-% preferably 26 - 75 wt.-%, especially 30 - 66 wt.-%, in each case relative to the total dry weight of the cementitious composition.

Suitable OPC is, for example, classified as CEM I under standard DIN 197-1. However, other OPC classified, for example, under the relevant ASTM, JIS or Chinese standards is also suitable.

It is possible, in a cementitious composition of the present invention, to use blended cements as cementitious binder such as Portland composite cement (CEM II), blast furnace cement (CEM III), pozzolanic cement (CEM IV) and composite cement (CEM V) according to DIN 197-1 in addition to OPC. It is further possible, in a cementitious composition of the present invention, to use special cements, such as calcium sulfoaluminate cement, calcium aluminate cement, or mixtures thereof in addition to the OPC.

According to certain embodiments, the OPC is a CEM I. According to further embodiments, the OPC is a white cement. White cements can be preferred within the present context as they have a lower water demand. According to preferred embodiments, the cementitious binder, especially the OPC, has a low content of tricalcium aluminate (C3A). A low content means that the content of C3A in the cementitious binder of the present invention preferably is <10 wt.-%, more preferably <5 wt.-%, each based on the total dry weight of the cementitious binder.

According to embodiments, a cementitious composition of the present invention may also comprise latent hydraulic binders and/or pozzolanic binders. Suitable latent hydraulic and/or pozzolanic binders are in particular granulated blast furnace slag, fly ash, silica fume and/or micro silica.

According to embodiments, the ratio of OPC in the cementitious binder is at least 35 wt.-%, preferably at least 65 wt.-%, and most preferably at least 80 wt.-%, in each case relative to the total dry weight of the cementitious binder. In an especially preferred embodiment of the present invention, the cementitious binder consists of ordinary Portland Cement.

According to further embodiments, the cementitious binder may comprise latent hydraulic and/or pozzolanic binders in the range of 1 - 65 wt.-%, preferably 5 - 35 wt.-%, more preferably 10 - 20 wt.-%, in each case relative to the total dry weight of the cementitious binder. Advantageous latent hydraulic and/or pozzolanic binders are granulated blast furnace slag, fly ash, silica fume and/or micro silica.

A suitable cementitious binder may thus consist to 100 wt.-% of Ordinary Portland Cement.

A suitable cementitious binder may also comprise, in each case relative to the total dry weight of the cementitious binder,
a) at least 35 wt.-%, preferably at least 65 wt.-%, and most preferably at least 80 wt.-% of Ordinary Portland Cement,
b) 1 - 65 wt.-%, preferably 5 - 35 wt.-%, more preferably 10 - 20 wt.-% of at least one latent hydraulic and/or pozzolanic binder.

The at least one latent hydraulic and/or pozzolanic binder is preferably selected from granulated blast furnace slag, fly ash, silica fume and/or micro silica.

A suitable cementitious binder may also consist of, in each case relative to the total dry weight of the cementitious binder,
a) at least 35 wt.-%, preferably at least 65 wt.-%, and most preferably at least 80 wt.-% of Ordinary Portland Cement,
b) 1 - 65 wt.-%, preferably 5 - 35 wt.-%, more preferably 10 - 20 wt.-% of at least one latent hydraulic and/or pozzolanic binder.

The at least one latent hydraulic and/or pozzolanic binder is preferably selected from granulated blast furnace slag, fly ash, silica fume and/or micro silica.

Aluminum oxide within the present context refers to materials with a content of Al₂O₃ of at least 5 wt.-%, preferably at least 50 wt.-%, more preferably at least 75 wt.-%, still more preferably at least 85 wt.-%, and especially at least 90 wt.-%, in each case relative to the total dry weight of the material. Aluminum oxide of the present invention typically further contains SiO₂, Fe₂O₃, TiO₂, and/or oxides of alkali metals and alkaline earth metals. Preferred aluminum oxides are alumina, especially α-alumina, which can be calcined. Further preferred materials are calcined bauxites.

Aluminum oxide, within the present context, does not relate to aluminates or alumo-silicates. Aluminum oxide is thus not aluminate cement or any aluminosilicates.

Within the present context aluminum oxide is used as a powder. Aluminum oxide can thus be characterized by a particle size distribution. The particle size of aluminum oxide can be analyzed by sieve analysis as described for example in standards ASTM C136/C136M and ASTM C117-17. The process separates fine particles from coarser particles by passing the material through a number of sieves of different mesh sizes. The material to be analysed is vibrated through a series of sequentially decreasing sieves using a single, or combination of horizontal, vertical or rotational motion. In case of particles with a particle size below 75 µm, the wet method of ASTM C117-17 is used. A lower end of a particle size distribution can then be given by the mesh size of a sieve retaining 100% of the particles and an upper end can be given by the smallest mesh size of a sieve through which 100% of the particles still pass. In the following the mesh size and thus the lower and upper end of a particle size distribution is given in µm.

According to embodiments, aluminum oxide of the present invention has a particle size as determined by sieve analysis in the range of 0.001 mm - 8 mm, preferably of 0.044 mm - 6 mm, more preferably of 0.125 mm - 5 mm, still more preferably of 0.25 mm - 3 mm.

Aluminum oxide, within the present context, does not relate to fibrous alumina. Aluminum oxide within the present context does also not relate to aluminum oxide based nano-materials.

According to especially preferred embodiments of the present invention, the aluminum oxide is characterized by a bimodal particle size distribution. Such a bimodal particle size distribution may result from mixing of two types of aluminum oxide with different particle size distribution. It is thus preferred that the aluminum oxide used in a cementitious composition of the present invention is a mixture of two aluminum oxides with different particle size distribution.

The amount of aluminum oxide in a cementitious composition of the present invention is in the range of 5 - 95 wt.-%, preferably 20 - 73 wt.-% more preferably 33 - 66 wt.-%, in each case relative to the total dry weight of the cementitious composition.

Without wishing to be bound by theory it is believed that aluminum oxide has a porous structure that enables water from the cement paste to absorb to the aluminum oxide. Absorbed water is kept inside the aluminum oxide during cement hydration and thus the autogenous strain is significantly reduced over the hydration period. The free water kept inside the aluminum oxide will finally diffuse into the cement matrix and react with unreacted cement after the final setting leading to a stronger connection of the aluminum oxide to the cement matrix.

Fibers within the present context can be any of steel fibers, natural fibers, synthetic fibers, or mixtures thereof. Preferred fibers are steel fibers, especially preferred are brass coated steel fibers. According to embodiments, steel fibers can be high-carbon steel fibers. According to preferred embodiments, steel fibers can be brass coated high-carbon steel fibers.

Steel fibers, suitable for the reinforcement of cementitious composition are known to the person skilled in the art per se. Steel fibers, suitable within the present context, are not particular limited. They can be chosen from any steel fiber available for the reinforcement of cementitious materials. Suitable steel fibers are for example disclosed in patents WO1997/11239, WO 2010/142808.

Suitable steel fibers can have a length in the range of 5 mm - 60 mm and a diameter in the range of 0.1 mm - 1 mm. However, various other length or diameter are also possible.

Suitable steel fibers may be chemically and/or mechanically modified, for example by embossing or coating. Suitable steel fibers may have curved or hooked ends. According to an especially preferred embodiment, the fibers are brass coated steel fibers with a length in the range of 5 - 30 mm and a diameter in the range of 0.1 - 0.5 mm.

Suitable synthetic fibers are based on polyolefins, especially polyethylene and/or polypropylene. It is, however, also possible to use other fibers based on polyolefines such as fibers based on polyethyleneterephthalate (PET) and composite fibers, aramid fibers, especially poly(p-phenylene terephthalamide) and/or poly(m-phenylen terephthalamide) fibers. Fibers useful within the present invention can be highly fibrillar. Especially, fibers suitable within the present context are branched, preferably highly branched. They can be used as a pulp product, as a fibril, or as a cut fiber. It is furthermore possible that fibers useful within the present context are chemically and/or mechanically modified, for example by embossing.

The amount of fibers in a cementitious composition of the present invention is in the range of 1 - 15 wt.-% preferably 2 - 10 wt.-%, more preferably 3 - 6 wt.-%, in each case relative to the total dry weight of the cementitious composition.

A cementitious composition of the present invention may additionally comprise at least one aggregate. Aggregates can be any material that is non-reactive in the hydration reaction of cementitious binders. Aggregates can thus be any aggregate typically used for mortar and/or concrete. Typical aggregates are for example rock, crushed stone, gravel, slag, sand, especially quartz sand, river sand and/or manufactured sand, recycled concrete, glass, expanded glass, pumice, perlite, vermiculite, and/or fine aggregates such as ground limestone, and/or ground dolomite. Aggregates useful for the present invention can have any shape and size typically encountered for such aggregates. Aggregates useful for the present invention are as described for example in EN 12620:2008-07 and EN 13139:2015-07.

According to embodiments, aggregates having particle sizes of not more than 8 mm, more preferably not more than 5 mm, still more preferably not more than 3 mm are used in a dry mortar of the present invention.

A cementitious composition of the present invention may comprise 5 - 59 wt.-%, preferably 35 - 55 wt.-%, especially 40 - 55 wt.-%, in each case relative to the total dry weight of the cementitious composition, of at least one aggregate.

According to a particularly preferred embodiment, the at least one aggregate comprises or consists of sand. Sand is a naturally occurring granular material composed of finely divided rock or mineral particles. It is available in various forms and sizes. Especially, the at least one aggregate consist of sand, in particular quartz sand, river sand, manufactured sand, for example from granite or limestone, or mixtures thereof. Suitable sands are described in standards ASTM C778 or EN 196-1.

A cementitious composition of the present invention advantageously further comprises fine aggregates or fillers. Fine aggregate or filler is non-reactive in the hydration reaction of cementitious binders and has a particle size predominantly passing a 0.125 mm, preferably passing a 0.063 mm sieve. Typical fillers include finely ground rock flour such as fine limestone.

Preferably, fillers and aggregates of different particle sizes are mixed to optimally adjust the properties of the cementitious composition. Such mixtures are known to the person skilled in the art.

A cementitious composition of the present invention advantageously further comprises additives common in the mortar and/or concrete industry such as plasticizers and/or superplasticizers, redispersible polymers, accelerators, retarders, air entrainers, stabilizers, viscosity modifiers, thickeners, water reducers, accelerators, retarders, water resisting agents, strength enhancing additives, blowing agents, pigments, corrosion inhibitors, etc. It can be advantageous to combine two or more of the mentioned additives in one cementitious composition.

According to embodiments, a dry cementitious composition of the present invention comprises, in each case based on the total dry weight of the cementitious composition:
a) 4 - 80 wt.-%, preferably 26 - 75 wt.-%, especially 30 - 66 wt.-% of a cementitious binder,
b) 5 - 95 wt.-%, preferably 20 - 73 wt.-% more preferably 33 - 66 wt.-% of aluminum oxide with a particle size as determined by sieve analysis in the range of 0.001 mm - 8 mm, preferably of 0.044 mm - 6 mm, more preferably of 0.125 mm - 5 mm, still more preferably of 0.25 mm - 3 mm,
c) 1 - 15 wt.-% preferably 2 - 10 wt.-%, more preferably 3 - 6 wt.-% of fibers,
d) optionally 5 - 59 wt.-% of at least one aggregate,
e) optionally further additives.

The cementitious binder comprising, based on the total weight of the cementitious binder, at least 35 wt.-%, preferably at least 65 wt.-%, and most preferably at least 80 wt.-% of Ordinary Portland Cement and optionally 1 - 65 wt.-%, preferably 5 - 35 wt.-%, more preferably 10 - 20 wt.-% of at least one latent hydraulic and/or pozzolanic binder.

According to other embodiments, a dry cementitious composition of the present invention consists of, in each case based on the total dry weight of the cementitious composition:
a) 4 - 80 wt.-%, preferably 26 - 75 wt.-%, especially 30 - 66 wt.-% of a cementitious binder,
b) 5 - 95 wt.-%, preferably 20 - 73 wt.-% more preferably 33 - 66 wt.-% of aluminum oxide with a particle size as determined by sieve analysis in the range of 0.001 mm - 8 mm, preferably of 0.044 mm - 6 mm, more preferably of 0.125 mm - 5 mm, still more preferably of 0.25 mm - 3 mm,
c) 1 - 15 wt.-% preferably 2 - 10 wt.-%, more preferably 3 - 6 wt.-% of fibers,
d) optionally 5 - 59 wt.-% of at least one aggregate,
e) optionally further additives.

The cementitious binder comprising, based on the total weight of the cementitious binder, at least 35 wt.-%, preferably at least 65 wt.-%, and most preferably at least 80 wt.-% of Ordinary Portland Cement and optionally 1 - 65 wt.-%, preferably 5 - 35 wt.-%, more preferably 10 - 20 wt.-% of at least one latent hydraulic and/or pozzolanic binder.

According to still other embodiments, a dry cementitious composition of the present invention consists of, in each case based on the total dry weight of the cementitious composition:
a) 4 - 75 wt.-% of Ordinary Portland Cement,
b) 0 - 20 wt.-% of at least one latent hydraulic and/or pozzolanic binder,
c) 5 - 95 wt.-%, preferably 20 - 73 wt.-% more preferably 33 - 66 wt.-% of aluminum oxide with a particle size as determined by sieve analysis in the range of 0.001 mm - 8 mm, preferably of 0.044 mm - 6 mm, more preferably of 0.125 mm - 5 mm, still more preferably of 0.25 mm - 3 mm,
d) 1 - 15 wt.-% preferably 2 - 10 wt.-%, more preferably 3 - 6 wt.-% of fibers,
e) optionally 5 - 59 wt.-% of at least one aggregate,
f) optionally further additives.

In another aspect the present invention relates to a wet cementitious composition. A wet cementitious composition is obtained by mixing a dry cementitious composition as described above with water, where water is present in an amount in the range of 5 - 50 wt.-%, preferably 5 - 40 wt.-%, more preferably 6 - 30 wt.-%, still more preferably 6 - 20 wt.-%, especially 7.5 - 10 wt.-%, in each case relative to the total weight of the dry cementitious composition.

Water can be any water available such as distilled water, purified water, tap water, mineral water, spring water, and well water. The use of waste water is possible only in cases where the composition of such waste water is known and where none of the impurities comprised may impart the functionality of any other component of the composition of the present invention. The use of salt water is not possible due to its high content of chlorides and the risk of corrosion of steel reinforcement associated therewith.

Methods and devices for mixing a dry cementitious composition with water are known to the person skilled in the art. It is for example possible to mix dry cementitious composition with water by means of hand held agitators, Hobart mixers, portable concrete mixers, mixing trucks, mixing buckets, paddle mixers, jet mixers, screw mixers, auger mixers, horizontal single shaft mixers, twin shaft paddle mixers, vertical shaft mixers, ribbon blenders, orbiting mixers, change-can mixers, tumbling vessels, vertical agitated chambers or air agitated operations. Mixing can be continuously, semi-continuously or batch-wise. Continuous mixing offers the advantage of a high production speed.

The mixing water may contain at least one additive common in the mortar and/or concrete industry. It can be especially preferred for the mixing water to contain at least one plasticizer or superplasticizer.

The hardening of a dry cementitious composition of the present invention starts upon the mixing with water.

The wet cementitious composition is preferably a mortar or concrete composition, in particular self-compacting concrete, high-strength or ultra-high strength concrete or high-strength or ultra-high strength mortar. In a preferred embodiment, the wet cementitious composition is a high strength or ultra high strength mortar.

In another aspect the present invention relates to a hardend body obtained by the hardening of a wet cementitious composition as described above.

In yet another aspect the present invention relates to the use of a dry cementitious composition or of a wet cementitious composition as previously described for the purpose of grouting of wind turbine towers offshore or onshore.

In a further aspect the present invention relates to the use of a dry cementitious composition or of a wet cementitious composition as previously described in a system according to principles 3, 4, and 7 of EN 1504-3 or in a system according to EN 1504-6 or as a high strength grout according to DAfStb guideline VeBMR or as a class A, B, C non-shrink grout according to ASTM C1107.

DIN EN 1504-3 relates to products and systems for the protection and repair of concrete structures. Principle 3 relates to concrete restoration, principle 4 relates to structural strengthening, principle 7 relates to the preservation of restoration of passivity. A cementitious composition of the present invention is thus especially suitable for the use as a mortar for concrete restoration, as well as mortar, concrete or crack filler for structural strengthening, as well as to increase the cover over rebars or to replace carbonated concrete.

EN 1504-6 relates to products and systems to be used for the anchoring of reinforcing steel bars. Cementitious compositions of the present invention are thus suitable to be used for the anchoring of reinforcing steel bars.

Guideline VeBMR of the DAfStb relates to grouting materials with high early strength and compressive strength class C50/60 or higher. The cementitious compositions of the present invention are thus suitable to be used as supplementary concrete material and cement mortar in thin layers, for example for the grouting of joints or the concreting of columns in sleeve foundations.

In another aspect the present invention relates to a method for the increase of the compressive strength of a cementitious composition, said method comprising the steps of
a) preparing a dry cementitious composition based on Ordinary Portland Cement,
b) adding aluminum oxide with a particle size in the range of 0.001 mm - 8 mm, preferably of 0.044 mm - 6 mm, more preferably of 0.125 mm - 5 mm, still more preferably of 0.25 mm - 3 mm to the dry cementitious composition,
c) adding fibers, especially steel fibers, to the dry cementitious composition.

According to embodiments, aluminum oxide is added in an amount in the range of 5 - 95 wt.-%, preferably 20 - 73 wt.-% more preferably 33 - 66 wt.-%, in each case relative to the total dry weight of the cementitious composition, and fibers are added in an amount in the range of 1 - 15 wt.-% preferably 2 - 10 wt.-%, more preferably 3 - 6 wt.-%, in each case relative to the total dry weight of the cementitious composition.

In a last aspect the present invention relates to an admixture to be used in a method as described above. The admixture comprises or consists of aluminum oxide with a particle size in the range of 0.001 mm - 8 mm, preferably of 0.044 mm - 6 mm, more preferably of 0.125 mm - 5 mm, still more preferably of 0.25 mm - 3 mm and fibers selected from steel fibers, natural fibers , synthetic fibers, or mixtures thereof, preferably steel fibers.

According to embodiments, the weight ratio of aluminum oxide to steel fibers in an admixture of the present invention is in the range of 1:3 - 95:1, preferably 2:1 - 50:1, especially 8:1 - 20:1.

According to embodiments, the admixture is a mono-component admixture. In such a mono-component admixture the aluminum oxide and the fibers are supplied as a premix and are stored in one container. According to other embodiments, the admixture is a two-component admixture. In such a two-component admixture, the aluminum oxide and the fibers are stored in separate containers.

### Examples

The following table 1 gives an overview of the materials used.

**Table 1: materials used**

| | |
|---|---|
| OPC | Ordinary Portland cement (CEM I 52,5 R) |
| SF | Silica Fume (96% SiO₂; primary particle size: 0.1 - 0.3 µm) |
| Micro silica | primary particle size: 0 - 0.1 µm |
| Sand 1 | Silica sand with particle size 0.1 - 0.7 mm |
| Sand 2 | Silica sand with particle size 0.6 - 1 mm |
| Sand 3 | Silica sand with particle size 2 - 3 mm |
| Aluminum oxide 1 | Diasporic bauxite calcined in rotary kiln (85% Al2O3; 0-1 mm) |
| Aluminum oxide 2 | Gibbsitic bauxite, calcined (min. 90% Al2O3, 1-3 mm) |
| Aluminum oxide 3 | Bauxite, calcined in rotary kiln (0-0.5 mm) |
| Aluminum oxide 4 | Bauxite, calcined (0-0.085 mm) |
| Steel fibers | 12 x 0.2 mm (brass coated high-carbon steel fibers) |
| Additives | Mixture of Ca(OH)2, gypsum, mod. polycarboxylate ether, defoamer, viscosity modifier |

Examples were prepared by dry mixing the respective amount of OPC, SF, Micro silica, Sand, Aluminum oxide, Steel fibers, and additives as given in below table 2 in a V-type mixer for 20 minutes. To the dry composition of examples Ref-1 - Ref-4 and 1-1 as well as 1-2, water was added in an amount sufficient to make 7.5 wt.-% relative to the total weight of the dry composition. Dry composition Ref-5 was mixed with 12.9 wt.-% water to achieve sufficient consistency for further testing. Mixing was then continued for another 5 minutes. The wet compositions thus obtained were measured according to the following procedures.

**Slump flow:** measured according to EN 13395-1.

**Compressive strength:** measured according to EN 12190 on prisms of 40 x 40 x 160 mm after hardening underwater for the time indicated in below table 2.

**Table 2: Example compositions and measurement results (numbers relate to weight in g if not otherwise indicated). Examples 1-1 and 1-2 are inventive examples, Ref-1 to Ref-4 are comparative examples not according to the invention.**

| | Ref-1 | Ref-2 | Ref-3 | Ref-4 | 1-1 | 1-2 | Ref-5 |
|---|---|---|---|---|---|---|---|
| OPC | 35 | 35 | 35 | 35 | 35 | 35 | 30 |
| SF | 3 | 3 | 3 | 3 | 3 | 3 | 4.5 |
| Micro silica | 1.9 | 1.92 | 1.9 | 1.9 | 1.92 | 1.92 | |
| Sand 1 | 7.1 | | 7.1 | 7.1 | | | |
| Sand 2 | 11 | | 11 | 11 | | | |
| Sand 3 | 40.5 | | 40.5 | 40.5 | | | 45 |
| Aluminum oxide 1 | | 18.1 | | | 18.1 | 18.1 | |
| Aluminum oxide 2 | | 40.5 | | | 40.5 | 40.5 | |
| Aluminum oxide 3 | | | | | | | 97.5 |
| Aluminum oxide 4 | | | | | | | 11.3 |
| Steel fibers | | | 3 | 6 | 3 | 6 | |
| Additives | 1.5 | 1.5 | 1.5 | 1.5 | 1.5 | 1.5 | 2.3 |
| Slump flow [mm] | 265 | 265 | 250 | 228 | 246 | 230 | n.m. |
| 24h Compressive strength [MPa] | 79 | 98 | 91 | 100 | 111 | 122 | 21 |
| 7d Compressive strength [MPa] | 107 | n.m. | 126 | 136 | n.m. | n.m. | n.m. |
| 28d Compressive strength [MPa] | 115 | 151 | 154 | 159 | 186 | 198 | n.m. |

| | | | | | | | |
|---|---|---|---|---|---|---|---|
| n.m.: not measured | | | | | | | |

The results in the above table 2 show that the concomitant use of aluminum oxide and steel fibers leads to a significant increase of compressive strength as compared to a cementitious composition where sand is used instead of the aluminum oxide and without fibers (Examples 1-1 and 1-2 vs Ref-1). It can further be seen from the examples in table 2 that the concomitant use of aluminum oxide and steel fibers yields a higher increase in compressive strength as compared to the use of either aluminum oxide or steel fibers alone. Example Ref-5, which is not according to the present invention, shows that only by the use of very fine aluminum oxide, a sufficiently high compressive strength cannot be achieved.

## Claims

1. A dry cementitious composition comprising or consisting of, in each case relative to the total dry weight of the cementitious composition,
a) 4 - 80 wt.-% preferably 26 - 75 wt.-%, especially 30 - 66 wt.-% of a cementitious binder, especially of Ordinary Portland Cement,
b) 5 - 95 wt.-%, preferably 20 - 73 wt.-% more preferably 33 - 66 wt.-%, of aluminum oxide, and
c) 1 - 15 wt.-% preferably 2 - 10 wt.-%, more preferably 3 - 6 wt.-% of fibers.

2. A dry cementitious composition according to claim 1, **characterized in that** the aluminum oxide has a particle size as determined by sieve analysis in the range of 0.001 mm - 8 mm, preferably of 0.044 mm - 6 mm, more preferably of 0.125 mm - 5 mm, still more preferably of 0.25 mm - 3 mm.

3. A dry cementitious composition according to claim 1 or 2, **characterized in that** the aluminum oxide has a bimodal particle size distribution.

4. A dry cementitious composition according to any of the preceding claims, **characterized in that** the fibers are selected from any of steel fibers, natural fibers, synthetic fibers, or mixtures thereof, preferably from steel fibers, especially preferred from brass coated steel fibers.

5. A wet cementitious composition obtained by mixing a dry cementitious composition according to any of claims 1 - 4 with water, where water is present in an amount in the range of 5 - 50 wt.-%, preferably 5 - 40 wt.-%, more preferably 6 - 30 wt.-%, still more preferably 6 - 20 wt.-%, especially 7.5 - 10 wt.-%, in each case relative to the total weight of the dry cementitious composition.

6. A hardened body obtained by hardening a wet composition of claim 5.

7. The use of a dry cementitious composition according to any of claims 1-4 or of a wet cementitious composition according to claim 5 for the purpose of grouting of wind turbine towers offshore or onshore.

8. The use of a dry cementitious composition according to any of claims 1-4 or of a wet cementitious composition according to claim 5 in a system according to principles 3, 4, and 7 of EN 1504-3 or in a system according to EN 1504-6 or as a high strength grout according to DAfStb guideline VeBMR or as a class A, B, C non-shrink grout according to ASTM C1107.

9. A method to increase the compressive strength of a cementitious composition, said method comprising the steps of
a) preparing a dry cementitious composition based on Ordinary Portland Cement,
b) adding aluminum oxide with a particle size in the range of 0.001 mm - 8 mm, preferably of 0.044 mm - 6 mm, more preferably of 0.125 mm - 5 mm, still more preferably of 0.25 mm - 3 mm to the dry cementitious composition,
c) adding fibers, especially steel fibers, to the dry cementitious composition.

10. A method as claimed in claim 9, **characterized in that** aluminum oxide is added in an amount in the range of 5 - 95 wt.-%, preferably 20 - 73 wt.-% more preferably 33 - 66 wt.-%, in each case relative to the total dry weight of the cementitious composition, and fibers are added in an amount in the range of 1 - 15 wt.-% preferably 2 - 10 wt.-%, more preferably 3 - 6 wt.-%, in each case relative to the total dry weight of the cementitious composition.

11. An admixture to be used in a method according to claims 9 or 10, said admixture comprising or consisting of aluminum oxide with a particle size in the range of 0.001 mm - 8 mm, preferably of 0.044 mm - 6 mm, more preferably of 0.125 mm - 5 mm, still more preferably of 0.25 mm - 3 mm and fibers selected from steel fibers, natural fibers , synthetic fibers, or mixtures thereof, preferably steel fibers.

12. An admixture according to claim 11, **characterized in that** the weight ratio of aluminum oxide to steel fibers is in the range of 1:3 - 95:1, preferably 2:1 - 50:1, especially 8:1 - 20:1.
